(19) Europäisches Patentamt
European Patent Office
Office européen des brevets

(11) Veröffentlichungsnummer : **0 027 222**
**B1**

(12) # EUROPÄISCHE PATENTSCHRIFT

(45) Veröffentlichungstag der Patentschrift : **16.02.83**

(21) Anmeldenummer : **80106023.7**

(22) Anmeldetag : **04.10.80**

(51) Int. Cl.³ : **C 08 L 61/14**, C 08 K 3/22, C 08 K 3/38, C 09 J 3/16// D04H1/60

(54) **Vernetzbare Mischkondensationsprodukte auf Basis von Phenol-Butyraldehyd-Harzen und thermoplastischen Kunststoffen, deren Herstellung und Verwendung.**

(30) Priorität : **13.10.79 DE 2941635**

(43) Veröffentlichungstag der Anmeldung : **22.04.81 Patentblatt 81/16**

(45) Bekanntmachung des Hinweises auf die Patenterteilung : **16.02.83 Patentblatt 83/07**

(84) Benannte Vertragsstaaten : **DE FR GB IT SE**

(56) Entgegenhaltungen :
**CH A 564 076**
**DE A 1 544 771**
**DE A 2 700 092**
**DE A 2 847 030**

(73) Patentinhaber : **BASF Aktiengesellschaft**
**Carl-Bosch-Strasse 38**
**D-6700 Ludwigshafen (DE)**

(72) Erfinder : **Petersen, Harro, Dr.**
**Kalmitstrasse 23**
**D-6710 Frankenthal (DE)**
Erfinder : **Fischer, Kurt**
**Mundenheimer Strasse 168**
**D-6700 Ludwigshafen (DE)**
Erfinder : **Zaunbrecher, Horst**
**Freiligrathstrasse 1**
**D-6520 Worms (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 027 222 B1

# Vernetzbare Mischkondensationsprodukte auf Basis von Phenol-Butyraldehyd-Harzen und thermoplastischen Kunststoffen, deren Herstellung und Verwendung

Aus der US-PS 2 902 458 ist bekannt, Phenol-Formaldehyd-Harze mit wäßrigen Emulsionen von Polyvinylacetat in Gegenwart von Emulgiermitteln umzusetzen. Dabei werden Produkte erhalten, die beispielsweise bei der Herstellung von Spanplatten oder zum Verkleben von Holz eingesetzt werden. Der Nachteil dieser Produkte äußert sich bei der Verarbeitung, bei der erhebliche Mengen an Phenol und Formaldehyd abgespalten werden.

Aus der DE-OS 28 47 030 ist die Herstellung von Mischkondensationsprodukten durch Kondensieren von 0,8 bis 2,0 Mol Butyraldehyd mit 1 Mol eines Phenols bei Temperaturen von 80 bis 220 °C bekannt, wobei vor, während oder nach der Kondensation 5 bis 50 Gew.%, bezogen auf die Mischung aus Phenol und Butyraldehyd, mindestens eines funktionelle Gruppen enthaltenden thermoplastischen Kunststoffs zugesetzt wird, der unter den Kondensationsbedingungen mit Phenol, Butyraldehyd oder dem Phenol-Butyraldehyd-Harz reagiert. Die Formbeständigkeit und Flammwidrigkeit dieser Produkte ist noch verbesserungsbedürftig.

Aufgabe der Erfindung ist es, modifizierte Phenol-Butyraldehyd-Harze zur Verfügung zu stellen, die während der Verarbeitung praktisch kein Phenol abspalten, vernetzbar sind und als flammwidrig eingestuft werden können.

Die Aufgabe wird erfindungsgemäß gelöst durch ein Verfahren zur Herstellung von vernetzbaren Mischkondensationsprodukten auf Basis eines Phenols und Butyraldehyd, wenn man pro Mol eines Phenols 0,8 bis 2,0 Mol Butyraldehyd einsetzt, vor, während oder nach der Kondensation des Phenols und Butyraldehyd 5 bis 50 Gew.%, bezogen auf die Mischung aus Phenol und Butyraldehyd, eines thermoplastischen Kunststoffs zusetzt, der funktionelle Gruppen enthält, die Mischung homogenisiert, zerkleinert und anschließend mit 1 bis 10 Gew.% Borsäure und/oder 5 bis 40 Gew.% Aluminiumhydroxid oder Aluminiumoxid mischt.

Phenole, die zur Herstellung der Phenol-Butyraldehydkondensate benutzt werden, können z. B. mit Hilfe der allgemeinen Formel

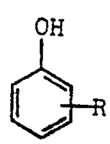

charakterisiert werden. Hierin bedeutet R ein Wasserstoff-, Chlor- oder Bromatom oder eine Alkylgruppe mit 1 bis 18 C-Atomen in irgendeiner ihrer isomeren Formen, die in der o-, m- oder p-Stellung zur Hydroxylgruppe stehen, eine alicyclische Gruppe mit 5 bis 18 C-Atomen, z. B. die Cyclopentyl-, Cyclohexyl-, Methylcyclohexyl- oder Butylcyclohexylgruppe, eine aromatische Gruppe oder Aralkylgruppe mit 6 bis 18 C-Atomen, wie die Phenyl-, α-Methylbenzyl-, Benzyl- oder Cumylgruppe. Weiterhin können phenolische Alkyl-, Cycloalkyl-, Aryl- und Aralkylketone sowie phenolische Alkyl-, Cycloalkyl-, Aryl- und Aralkylcarbonsäuren verwendet werden.

Geeignete substituierte Phenole sind beispielsweise p-tert-Butylphenol, p-sek-Butylphenol, p-tert-Hexylphenol, p-Isooctylphenol; p-Phenylphenol, p-Benzylphenol (Bis-phenol A), p-Cyclohexylphenol, p-Decylphenol, p-Dodecylphenol, p-Tetradecylphenol, p-Octadecylphenol, p-Nonylphenol, p-Methylphenol, p-β-Naphthylphenol, p-α-Naphthylphenol, p-Pentadecylphenol, p-Cetylphenol, p-Cumylphenol, p-Hydroxyacetophenon, p-Hydroxybenzophenon, mit Limonen oder Ölsäure alkylierte Phenole sowie die entsprechenden o- und m-Derivate, wie m-Butylphenol und o-Butylphenol und Gemische derartiger Phenole.

Aus dem Vorstehenden ist ersichtlich, daß praktisch jedes Phenol zur Herstellung der erfindungsgemäß einsetzbaren Phenolharze verwendet werden kann, sofern es eine in bekannter Weise reaktionsfähige Stelle im Molekül besitzt, welche die Ausbildung von — substituierten — Methylenbrücken unter Bildung eines Kondensationsproduktes ermöglicht. Man kann reine Phenole verwenden, doch ist dies nicht immer erforderlich. Beispielsweise kann man auch Phenole alkylieren und hierauf mit Butyraldehyd unter Bildung eines Rohproduktes zur Umsetzung bringen, das polyalkylierte sowie nichtalkylierte Phenole enthält. Man kann auch Gemische der vorgenannten Phenole verwenden.

Als Aldehyde kommen n-Butyraldehyd und Isobutyraldehyd sowie Gemische der isomeren Butyraldehyde in Betracht. Vorzugsweise verwendet man Isobutyraldehyd.

Als saure Katalysatoren verwendet man Phosphortrichlorid, Phosphoroxychlorid und Phosphorpentachlorid, Schwefelsäure, konzentrierte Salzsäure und aromatische Sulfonsäuren, wie p-Toluolsulfonsäure. Die erforderliche Menge an saurem Katalysator beträgt im allgemeinen weniger als 5, insbesondere 0,1 bis 1 Gew.%, bezogen auf Phenol.

Vorzugsweise verwendet man das unsubstituierte Phenol und Isobutyraldehyd zur Herstellung der Phenol-Butyraldehyd-Harze. Ein Mol eines Phenols wird mit 0,8 bis 2,0, vorzugsweise 1,0 bis 1,2 Mol Isobutyraldehyd und/oder n-Butyraldehyd kondensiert.

Zur Herstellung der Phenol-Butyraldehyd-Harze kann man das Phenol und den sauren Katalysator in dem Reaktionsgefäß vorlegen und den Aldehyd kontinuierlich oder portionsweise zugeben. Die Kondensation wird vorzugsweise in Abwesenheit eines Lösungsmittels vorgenommen. Um von Anfang an eine gute Durchmischung der Komponenten zu bewerkstelligen, wird in diesen Fällen das Phenol in bereits geschmolzenem Zustand eingesetzt bzw. im Reaktionsgefäß aufgeschmolzen, bevor Isobutyraldehyd oder n-Butyraldehyd eingesetzt wird. Bei Zugabe des Butyraldehyds beginnt die Reaktion. Sie ist an einer Temperatursteigerung des Reaktionsgemisches zu erkennen. Die Kondensation des Phenols mit dem Butyraldehyd kann auch in der Weise durchgeführt werden, daß man die Reaktionskomponenten gleichzeitig dem Reaktor zuführt, wobei darauf zu achten ist, daß die Reaktion kontrollierbar verläuft. Sie kann diskontinuierlich oder auch kontinuierlich durchgeführt werden. Ebenso ist es möglich, die Kondensationsreaktion auch unter Druck bei höheren Temperaturen vorzunehmen. In diesem Fall benötigt man kürzere Verweilzeiten. Die Temperatur bei der Kondensation kann bis zu 200 °C betragen. Die Kondensation kann jedoch auch unter relativ milden Bedingungen durchgeführt werden, in dem man den Aldehyd unter guter Durchmischung zum Phenol zugibt und am Rückfluß sieden läßt. Das bei der Kondensation entstehende Wasser bildet beispielsweise mit Isobutyraldehyd ein Azeotrop und kann daher auf diese Weise leicht aus dem System mit Hilfe bekannter Vorrichtungen entfernt werden. Mit fortschreitender Kondensation steigt die Temperatur des Reaktionsgemisches an. In Abhängigkeit von der Größe des Ansatzes wird das Reaktionsgemisch 4 bis 7 Stunden auf eine Temperatur von 105 °C erhitzt. Die Kondensation kann jedoch auch in Gegenwart von Lösungsmitteln, z. B. Toluol oder Xylol durchgeführt werden, jedoch bedeutet diese Maßnahme zusätzliche Kosten, weil anschließend das Lösungsmittel wieder entfernt werden muß. Die Kondensationsreaktion wird so lange fortgeführt, bis der n-Butyraldehyd oder Isobutyraldehyd einkondensiert ist. Der Fortgang der Kondensation kann verfolgt werden, indem man dem Reaktionsgemisch eine Probe entnimmt, das Wasser aus der Probe entfernt und den Erweichungspunkt bestimmt. Der Erweichungspunkt des wasserfreien Phenol-Butyraldehyd-Kondensats beträgt 80 bis 120 °C (gemessen nach DIN 53 180).

Bei der Herstellung der Kondensationsprodukte aus Phenol und Butyraldehyden kann man übliche Modifizierungsmittel verwenden. Bei diesen Stoffen handelt es sich z. B. um Harnstoff, cyclische Harnstoffe, wie Äthylen- und Propylenharnstoff, cyclische Harnstoffe, wie Äthylen- und Propylenharnstoff, Aminotriazine sowie die Methylol- oder Alkoxymethylderivate der genannten Verbindungen. Es ist auch möglich, Polykondensationsprodukte von Harnstoffen oder Aminotriazinen zu Beginn oder während der Kondensation oder auch bei der Mischkondensation einzusetzen.

Nach Abschluß der Kondensation kann man das Phenol-Butyraldehyd-Harz neutralisieren. Hierfür kann man Ammoniak, Amine sowie auch Natronlauge und Kalilauge verwenden. Vorzugsweise wählt man als Base Ammoniak. Durch Neutralisation des Harzes werden Rückspaltung und Nebenreaktionen weitgehend vermieden. Sofern eine Neutralisation vorgenommen wird, entfernt man das Wasser, überschüssigen Aldehyd und die flüchtigen Nebenprodukte der Kondensationsreaktion. Vorteilhafterweise werden die flüchtigen Produkte unter vermindertem Druck abdestilliert. Die leicht flüchtigen Produkte können vor oder nach dem Zusatz eines thermoplastischen, funktionelle Gruppen enthaltenden Kunststoffs entfernt werden.

Unter thermoplastischen Kunststoffen, die funktionelle Gruppen enthalten, sollen alle Polymerisate verstanden werden, die mit Phenol-Butyraldehyd-Harzen, Phenol oder mit Isobutyraldehyd bei Temperaturen bis zu 220 °C reagieren können. Mit Ausnahme von Polystyrol, Polyäthylen, Polypropylen, Polyisobutylen und nicht modifizierten Kautschuken kommen alle thermoplastischen Kunststoffe in Betracht. Funktionelle Gruppen, die in den thermoplastischen Kunststoffen enthalten sind, können folgende Gruppierungen sein : Ester-, Amid-, Hydroxyl-, Amin-, Carboxyl-, Anhydrid-, SH-, Carbamat-, Isocyanat-, Harnstoff-, N-Methylol- und NH-Gruppen sowie Halogenatome. Bei den thermoplastischen Kunststoffen kann es sich um Homo- oder Copolymerisate handeln.

Beispiele für thermoplastische Kunststoffe sind Polyvinylacetat, Polyvinylpropionat, Homopolymerisate von Estern äthylenisch ungesättigter $C_3$- bis $C_5$-Carbonsäuren, wie Acrylsäuremethylester, Acrylsäurebutylester, Acrylsäure-2-äthylhexylester, Methacrylsäuremethylester, Methacrylsäurebutylester, Crotonsäurepropylester, Maleinsäuredibutylester, Fumarsäurediäthylester, Maleinsäuremonomethylester und Fumarsäuremonobutylester. Besonders hervorzuheben sind außerdem die Copolymerisate des Äthylens mit Vinylestern, wie Vinylacetat, Vinylpropionat und Vinylbutyrat, Copolymerisate des Äthylens mit Estern äthylenisch ungesättigter $C_3$- bis $C_5$-Carbonsäuren, wie Acrylsäurebutylester, Methacrylsäurebutylester sowie Copolymerisate des Äthylens, die außer den angegebenen Comonomeren weitere Monomere einpolymerisiert enthalten, beispielsweise $C_3$- bis $C_5$-Äthylenisch ungesättigte Carbonsäuren, deren Amide oder Ester mit einwertigen Alkoholen und/oder Aminoalkoholen. Beispiele für weitere in Betracht kommende thermoplastische Kunststoffe sind Polyvinylchlorid, Polyvinylidenchlorid, Polyamide, wie Polycaprolactam und Kondensationsprodukte aus Adipinsäure und Hexamethylendiamin, Polyester z. B. aus Terephthalsäure und Äthylenglykol, Copolymerisate des Styrols mit Maleinsäureanhydrid, Copolymerisate aus Styrol und Maleinsäure, Copolymerisate aus Styrol und Estern äthylenisch ungesättigter $C_3$- bis $C_5$-Carbonsäuren, Polyvinylalkohol und oxidiertes Polyäthylenwachs. Die funktionellen Gruppierungen im thermoplastischen Kunststoff müssen in einer Menge vorhanden sein, daß eine Reaktion mit dem Phenol-Butyraldehydharz möglich ist.

In den meisten Fällen ist bereits ein Gehalt von 0,1 Gew.% an funktionellen Gruppen ausreichend, um eine Reaktion zwischen dem funktionelle

Gruppen enthaltenden thermoplastischen Kunststoff und dem Phenol-Butyraldehyd-Harz bei der Mischkondensation zu bewirken. Der Mindestgehalt an funktionellen Gruppen in thermoplastischen Kunststoff ist starken Schwankungen unterworfen und hängt beispielsweise von der Reaktivität der funktionellen Gruppen ab. Er kann leicht mit Hilfe von Vorversuchen ermittelt werden. Sofern nach der Mischkondensation eine homogene Mischung anfällt, enthält der thermoplastische Kunststoff eine ausreichende Menge funktioneller Gruppen. Beim Erhitzen von Phenol-Butyraldehyd-Harzen mit Polyäthylen oder Polystyrol auf Temperaturen von 170 bis 190 °C werden dagegen Produkte erhalten, die sich beim Abkühlen entmischen. So reichen beispielsweise bei Copolymerisaten aus Äthylen und Vinylacetat und/oder Alkylacrylaten bereits Monomerengehalte von 5 % Vinylacetat oder Alkylacrylat aus. Das Molekulargewicht der thermoplastischen Kunststoffe kann in einem weiten Bereich schwanken und bildet keine Einschränkung für die Anwendbarkeit bei der Herstellung der Mischkondensate. Die thermoplastischen Kunststoffe können sowohl in fester Form als auch in einem organischen Lösungsmittel gelöst oder als wäßrige Dispersion vorliegen. Bei den Dispersionen kann es sich um Primär- bzw. Sekundärdispersionen handeln. Die Dispersionen bzw. die Polymerisatlösungen können direkt zur Herstellung der erfindungsgemäßen Mischkondensationsprodukte verwendet werden. Die thermoplastischen Kunststoffe können jedoch auch zuvor aus den Lösungen bzw. Dispersionen isoliert werden.

Aufgrund des Gehalts an funktionellen Gruppen ist der thermoplastische Kunststoff mit dem Phenol-Butyraldehyd-Harz vernetzbar. Die Mischkondensation des Harzes mit dem thermoplastischen Kunststoff wird vor, während oder nach der Kondensation von Phenol mit Butyraldehyd durchgeführt. Vorzugsweise läßt man das Phenol-Butyraldehyd-Harz nach dem Entwässern mit dem thermoplastischen Kunststoff oder einer Mischung von thermoplastischen Kunststoffen reagieren. Die Reaktion kann diskontinuierlich oder kontinuierlich bei Temperaturen in dem Bereich von 80 bis 250, vorzugsweise 120 bis 180 °C, durchgeführt werden. Die Reaktionszeit kann in einem weiten Bereich schwanken, z. B. zwischen einer Minute bis 5 Stunden. Die Reaktionszeit hängt im wesentlichen von der Temperatur bei der Umsetzung ab. Eine über 5 Stunden hinausgehende Reaktionszeit, z. B. 10 Stunden Temperung bei einer Temperatur von 180 °C verändert die Reaktionsprodukte nicht wesentlich. Die Weiterkondensation, d. h. die Umsetzung des thermoplastischen Kunststoffs mit dem Phenol-Butyraldehyd-Harz kann unter vermindertem Druck, bei Normaldruck sowie auch unter höheren Drücken bei höheren Temperaturen kontinuierlich oder diskontinuierlich vorgenommen werden. Bezogen auf Phenol und Butyraldehyd setzt man bei der Mischkondensation 5 bis 50, vorzugsweise 10 bis 25 Gew.%, eines thermoplastischen Kunststoffs oder eines Gemisches von thermoplastischen Kunststoffen zu. Bei der Weiterkondensation entstehen Mischkondensate, die noch schmelzbar sind.

Setzt man den thermoplastischen Kunststoff bei der Weiterkondensation in Form von Lösungen bzw. als Dispersion ein, so muß man das Lösungsmittel bzw. das Wasser aus dem System entfernen. Dieses kann besonders schonend mit Hilfe einer azeotropen Destillation oder Abdestillieren der flüchtigen Bestandteile unter vermindertem Druck erfolgen. Die Schmelzpunkte der Mischkondensate betragen nach DIN 53 180 zwischen 60 und 170 °C. Die Mischkondensate werden in üblichen Vorrichtungen zerkleinert und vorzugsweise pulverisiert.

Um den Schmelzpunkt dieser Mischkondensationsprodukte zu erhöhen und um Massen zu erhalten, die als flammwidrig eingestuft werden können, werden die Mischkondensationsprodukte mit 1 bis 10 Gew.% Borsäure und/oder 5 bis 40 Gew.% Aluminiumhydroxid gemischt, wobei sich die Prozentangaben auf die Mischung beziehen. Man erhält auf diese Weise die erfindungsgemäßen vernetzbaren Mischkondensationsprodukte. Das Mischkondensationsprodukt aus Phenol-Butyraldehyd-Harz und den thermoplastischen Kunststoffen wird zu diesem Zweck auf eine Korngröße von 5 bis 400 vorzugsweise 50 bis 200 µm gemahlen. Das pulverförmige Mischkondensationsprodukt wird mit feinverteilter Borsäure und/oder feinverteiltem Aluminiumhydroxid ($Al(OH)_3$) oder Aluminiumoxid sowie hydratwasserhaltigen Hydroxiden oder Oxiden des Aluminiums vermengt. Von den zuletzt genannten Verbindungen verwendet man vorzugsweise wasserfreies Aluminiumhydroxid. Die Korngrößen der anorganischen Materialien liegen vorzugsweise in dem Bereich von 25 bis 150 µm.

Die pulverförmige, vernetzbare Mischung des Mischkondensationsproduktes mit Borsäure und/oder Aluminiumhydroxid wird als Schmelzkleber verwendet. Die Mischungen haben sich besonders als Bindemittel für Faservliese bewährt. Die erfindungsgemäßen Mischungen finden vor allem Verwendung bei der Herstellung von Dämmatten und Formteilen für die Autoinnenausstattung. Die Dämmatten werden erhalten, indem man Fasern auf einer Trommel oder einem Sieb zusammen mit pulverförmigen Mischkondensationprodukt ablegt und anschließend unter Erwärmen zusammenpreßt bzw. zu Formteilen verarbeitet. Dabei schmilzt die Mischung und verbindet nach dem Erkalten die einzelnen Fasern zu einem Formkörper. Als Fasern zur Herstellung der Dämmatten bzw. Formteile eignen sich synthetische und natürliche Fasern, Fasermischungen und Abfallfasern. Pro 100 Gew.-Teile Fasern verwendet man 10 bis 50 Gew.-Teile der Mischung aus Mischkondensat und Borsäure und/oder Aluminiumhydroxid. Die so erhaltenen Dämmatten können je nach dem Grad des Zusammenpressens ein unterschiedliches Raumgewicht aufweisen. Es liegt in der Regel zwischen 20 und 100 kg/m³. Die Herstellung der

Dämmatten erfolgt in der Regel bei Temperaturen zwischen 160 und 200 °C innerhalb von etwa 1 bis 5 Minuten. Nach dieser thermischen Behandlung ist die erfindungsgemäße Schmelzklebermasse noch schmelzbar. Die Matten können daher in einem zweiten Arbeitsgang verformt werden, um bestimmte Formkörper herzustellen. Das Verformen der Matten geschieht bei Temperaturen in dem Bereich von 150 bis 250, vorzugsweise 180 bis 220 °C. Die für die Verformung erforderliche Zeit beträgt 0,5 bis 3 Minuten. Man erhält dann einen Formkörper aus einem vernetzten Material, das nur noch bei hohen Temperaturen schmelzbar, sehr formbeständig und als flammwidrig anzusehen ist.

Die erfindungsgemäßen Mischungen aus Kondensationsprodukten und Borsäure und/oder Aluminiumhydroxid können außerdem zur Herstellung von Klebstoffmischungen, Holzleimen und Kernsandbindemitteln verwendet werden.

Die in den Beispielen angegebenen Teile sind Gew.-Teile, die Angaben in Prozent beziehen sich auf das Gewicht des Stoffes. Die Schmelzpunkte der Kondensate wurde nach DIN 53 180 bestimmt.

Beispiel 1

In einem Kolben, der mit Rührer, Kühler, Thermometer und Tropftrichter ausgestattet ist, werden 282 Teile Phenol und 3 Teile p-Toluolsulfonsäure vorgelegt und bei ca. 50 °C geschmolzen. In die Schmelze werden unter kräftigem Rühren innerhalb von 5 bis 8 Minuten 238 Teile Isobutyraldehyd eingetragen, wobei die Temperatur auf 80 bis 90 °C ansteigt. Nach beendetem Eintragen wird 4 Stunden bei Rückfluß gerührt. Die Innentemperatur steigt während dieser Zeit auf 95 bis 100 °C an. Anschließend werden 3,5 Teile konz. Ammoniak rasch zudosiert. Man destilliert zunächst bei Normaldruck bis 130 °C Sumpftemperatur die niedrigsiedenden Anteile ab und gibt zu dem zurückbleibenden Phenol-Isobutyraldehyd-Harz 85 Teile eines Copolymerisates, das aus 70 % Styrol, 20 % Isobutylacrylat und 10 % Maleinsäuremonobutylester aufgebaut ist. Die Reaktionskomponenten werden gut durchmischt. Dann destilliert man bei einem Druck von 30 mbar alle flüchtigen Bestandteile aus der Reaktionsmischung ab. Die Temperatur der Reaktionsmischung wird dabei auf 160 °C gesteigert. Die Mischkondensation ist nach einer Zeit von 30 Minuten bei 160 °C beendet. Man erhält 500 Teile eines hellbraun gefärbten Harzes, das einen Erweichungspunkt von 95 bis 105 °C aufweist. Es wird zu einem Pulver zermahlen und mit 50 Teilen Aluminiumhydroxidpulver und 25 Teilen gemahlener Borsäure gemischt. (Korngröße des Kondensationsproduktes 50 bis 150 µm, des Aluminiumhydroxids 25 bis 150 µm und der Borsäure 25 bis 150 µm). Die vernetzbare Mischung, die einen Erweichungspunkt von 140 bis 150 °C aufweist, wird in dieser Form als Bindemittel für Faservliese verwendet.

Man geht dabei so vor, daß man 100 Teile regenerierte Cellulosefasern (vorzugsweise natürliche Fasern mit geringen Anteilen an synthetischen fasern aus Polyester oder Polyamid) mit 30 Teilen des oben beschriebenen Mischkondensat-Pulvers im Luftstrom mischt und auf einer pneumatischen Anlage zu einem Vlies legt. Dieses Vlies wird dann zwischen beheizten Metallbändern (Lochblechen) zu einem Flächengebilde mit einer Dichte von ca. 30 bis 40 kg/m$^3$ bei einer Temperatur von etwa 200 °C verpreßt. Die dabei entweichenden Abgase enthalten keine umweltschädlichen Bestandteile. Das verfestigte Vlies kann wieder erwärmt und bei einer Temperatur von 180/220 °C zu Formteilen, z. B. Polsterungen und Dämmaterialien für die Automobilindustrie verpreßt werden. Die Formteile zeichnen sich durch eine hohe Formbeständigkeit und Standfestigkeit aus. Sie erfüllen sämtliche Qualitätsanforderungen, die an Produkte für den Einsatz in der Automobilindustrie gestellt werden.

Die Schwerentflammbarkeit ist wesentlich besser als die in der US-Norm FNVSS Nr. 302 geforderten Werte.

Beispiel 2

282 Teile Phenol und 3 Teile p-Toluolsulfonsäure werden in einem wie in Beispiel 1 beschriebenen Kolben bei 50 °C geschmolzen und innerhalb von 5 bis an 90 °C 8 Minuten mit 238 Teilen Isobutyraldehyd versetzt. Dabei steigt die Temperatur auf 80 bis. Nach beendeter Isobutyraldehydzugabe wird 4 Stunden unter Rückfluß gerührt, wobei die Innentemperatur auf 95 bis 100 °C ansteigt. Anschließend werden 3,5 Teile konz. Ammoniak rasch zugegeben und zunächst bei Normaldruck bis 130 °C Sumpftemperatur die niedrigsiedenden Anteile abdestilliert. Das Destillat besteht aus 26 Teilen Isobutyraldehyd und 41 Teilen Wasser. Das Phenol-Isobutyraldehyd-Harz enthält pro Mol Phenol 1 Mol Isobutyraldehyd einkondensiert. Nach Zugabe von 85 Teilen eines aus 60 % Äthylen und 40 % Vinylacetat aufgebauten Copolymerisates (Schmelzindex 18 g/10 Min. bei 2,16 kg) erniedrigt man den Druck und destilliert bei 20 bis 30 mbar bis 160 °C Sumpftemperatur alle flüchtigen Bestandteile aus der Reaktionsmischung ab. Die Mischkondensation ist innerhalb von 30 Minuten bei einer Temperatur von 160 °C beendet.

Als Rückstand werden ca. 500 Teile eines hellbraun gefärbten Mischkondensates erhalten, das einen Erweichungspunkt von 95 bis 100 °C hat.

Das Mischkondensat wird pulverisiert (Korngröße 50 bis 200 µm) und mit 40 Teilen gemahlener Borsäure (Korngröße 50 bis 150 µm) gemischt. Die vernetzbare Mischung weist einen Erweichungspunkt von 150 bis 160 °C (DIN 53 180) auf und wird als Bindemittel für Vliese aus Cellulosefasern verwendet. Die Vliese werden bei einer Temperatur von 200 bis 240 °C zu Formkörpern verpreßt, die sich durch eine hohe Standhaftigkeit auszeichnen.

Beispiel 3

In einem wie in Beispiel 1 beschriebenen Kolben werden 282 Teile Phenol und 3 Teile p-Toluolsulfonsäure gemischt und bei ca. 50 °C geschmolzen. In die Schmelze werden 85 Teile eines aus 65 % Äthylen und 35 % Vinylacetat aufgebauten Copolymerisates (Schmelzindex 120 g/10 Min. bei 2,16 kp) eingetragen und anschließend 238 Teile Isobutyraldehyd innerhalb von ca. 5 Minuten zugetropft. Die Temperatur des Reaktionsgemisches steigt dabei auf ca. 80 °C an. Nach beendetem Eintragen wird 4 Stunden bei Rückfluß gerührt, wobei die Innentemperatur auf 95 °C ansteigt. Anschließend werden 3,5 Teile konz. Ammoniak rasch zudosiert und zunächst bei Normaldruck die niedersiedenden Anteile bis ca. 130 °C Sumpftemperatur abdestilliert. Das Destillat besteht aus 27 Teilen Isobutyraldehyd und 39 Teilen Wasser. Danach erniedrigt man vorsichtig den Druck und destilliert bei ca. 20 mbar alle flüchtigen Bestandteile ab und erhöht unter diesem Druck die Temperatur des Reaktionsgemisches bis auf 160 °C. Als Rückstand werden 490 Teile eines hellbraun gefärbten Mischkondensates erhalten, das einen Erweichungspunkt von 98 °C hat.

Es wird zu einem Pulver der Korngröße von 50 bis 150 µm zermahlen und mit 98 Teilen Aluminiumhydroxidpulver (Korngröße 25 bis 100 µm) gemischt. Die vernetzbare Mischung, die einen Erweichungspunkt von 130 bis 135 °C aufweist, wird für die Verfestigung von Faservliesen eingesetzt, an die hinsichtlich der Schwerentflammbarkeit besonders hohe Anforderungen gestellt werden.

## Ansprüche

1. Verfahren zur Herstellung von vernetzbaren Mischkondensationsprodukten auf Basis eines Phenols und Butyraldehyds durch Kondensieren eines Phenols mit Butyraldehyd im Molverhältnis 1 : 0,8 bis 2,0, wobei man vor, während oder nach der Kondensation des Phenols und Butyraldehyd 5 bis 50 Gew.%, bezogen auf die Mischung aus Phenol und Butyraldehyd, eines thermoplastischen Kunststoffs zusetzt, der funktionelle Gruppen enthält, oder eines Gemisches solcher Kunststoffe, und die Mischkondensation bei Temperaturen von 80 bis 250 °C durchführt, dadurch gekennzeichnet, daß man das Mischkondensationsprodukt auf eine Korngröße von 5 bis 400 µm zerkleinert und es anschließend mit 1 bis 10 Gew.% Borsäure und/oder 5 bis 40 Gew.% Aluminiumhydroxid oder Aluminiumoxid mischt.

2. Verfahren nach Anspruch 1, dadurch gekennzeichnet, daß man bei der Kondensation eines Phenols mit Butyraldehyd pro Mol Phenol bis zu 0,4 Mol Harnstoff, eines cyclischen Harnstoffs oder eines Aminotriazins und/oder deren Methylol- oder Alkoxymethylderivate als Modifizierungsmittel mitverwendet.

3. Vernetzbare Mischung, erhalten gemäß dem Verfahren nach Anspruch 1.

4. Verwendung der vernetzbaren Mischungen nach den Ansprüchen 1 bis 3 als Schmelzkleber.

## Claims

1. Process for the preparation of crosslinkable co-condensation products based on a phenol and butyraldehyde by condensation of a phenol with butyraldehyde in a molar ratio of 1 : 0.8 to 2.0, 5 to 50 % by weight, based on the mixture of phenol and butyraldehyde, of a thermoplastic containing functional groups or of a mixture of such thermoplastics being added before, during or after the condensation of the phenol and butyraldehyde and the co-condensation being carried out at temperatures of 80 to 250 °C, wherein the co-condensation product is comminuted to a particle size of 5 to 400 µm and is subsequently mixed with 1 to 10 % by weight of boric acid and/or 5 to 40 % by weight of aluminium hydroxide or aluminium oxide.

2. Process according to claim 1, wherein up to 0.4 mole, per mole of phenol, of urea, a cyclic urea or an aminotriazine and/or a methylol or alkoxymethyl derivative thereof is also used, as a modifying agent, in the condensation of a phenol with butyraldehyde.

3. Crosslinkable mixture obtained by the process according to claim 1.

4. Use of the crosslinkable mixtures according to claims 1 to 3 as hot-melt adhesives.

## Revendications

1. Procédé de préparation de produits de condensation mixte, réticulables, à base d'un phénol et de butyraldéhyde, par condensation d'un phénol avec du butyraldéhyde, en rapport molaire de 1/0,8 à 2,0, 5 à 50 % en poids, rapportés au mélange de phénol et de butyraldéhyde, d'une matière thermoplastique contenant des groupes fonctionnels, ou d'un mélange de telles matières plastiques, étant ajoutés, et la condensation mixte étant effectuée à des températures de 80 à 250 °C, caractérisé par le fait qu'on broie le produit de condensation mixte à une grosseur de grains de 5 à 400 µm et on le mélange ensuite avec 1 à 10 % en poids d'acide borique et/ou 5 à 40 % en poids d'hydroxyde d'aluminium ou d'oxyde d'aluminium.

2. Procédé selon la revendication 1, caractérisé par le fait que, lors de la condensation d'un phénol avec du butyraldéhyde, on emploie simultanément comme agent de modification, par mole de phénol, jusqu'à 0,4 mole d'urée, d'une urée cyclique ou d'une aminotriazine et/ou leurs dérivés méthylolés ou alcoxyméthylés.

3. Mélange réticulable, obtenu par le procédé selon la revendication 1.

4. Utilisation des mélanges réticulables selon l'une des revendications 1 à 3 comme colle fusible.